Europäisches Patentamt

European Patent Office

Office européen des brevets

(19)

(11) **EP 0 636 995 B1**

(12) **FASCICULE DE BREVET EUROPEEN**

(45) Date de publication et mention
de la délivrance du brevet:
**25.08.1999 Bulletin 1999/34**

(51) Int Cl.<sup>6</sup>: **G06K 7/10**

(21) Numéro de dépôt: **94401324.2**

(22) Date de dépôt: **13.06.1994**

(54) **Dispositif d'analyse de supports d'informations pourvu de moyens de compensation de ses signaux de sortie**

Vorrichtung zur Analyse von Informationsträgern mit Mitteln zur Kompensation der Ausgangssignale

Device for analysing information supports with means for compensating its output signals

(84) Etats contractants désignés:
**AT BE CH DE DK ES FR GB GR IE IT LI LU MC NL PT SE**
Etats d'extension désignés:
**SI**

(30) Priorité: **29.06.1993 FR 9307916**

(43) Date de publication de la demande:
**01.02.1995 Bulletin 1995/05**

(73) Titulaire: **INTERNATIONALE DES JEUX**
**F-92643 Boulogne Billancourt Cédex (FR)**

(72) Inventeurs:
• **Gatto, Jean-Marie**
**F-75116 Paris (FR)**
• **Bertrand, Dominique**
**F-75017 Paris (FR)**

(74) Mandataire: **Obolensky, Michel et al**
**c/o CABINET LAVOIX**
**2, place d'Estienne d'Orves**
**75441 Paris Cédex 09 (FR)**

(56) Documents cités:
**EP-A- 0 180 391**        **DE-A- 3 409 818**
**GB-A- 2 018 483**        **US-A- 3 800 078**

## Description

La présente invention est relative aux dispositifs d'analyse de supports d'informations et se rapporte plus particulièrement à de tels dispositifs utilisés en particulier pour la lecture de bulletins de jeux ou de reçus dans les terminaux de prise de jeux tels que les jeux de loterie, de loto, de paris mutuels ou autres.

Ces dispositifs d'analyse de supports d'informations comportent généralement un détecteur d'images disposé en regard d'un rouleau d'entraînement d'un document à analyser. Le détecteur d'images comporte généralement une rangée de diodes électroluminescentes dont le nombre est fonction de la résolution horizontale et de l'intensité lumineuse requises. A ces diodes sont associés des organes de focalisation et de filtrage de la lumière destinés à focaliser les faisceaux des diodes sur une paroi transparente du boîtier du détecteur contre laquelle doit être appliquée la face du document à analyser qui porte d'une part des inscriptions fixes telles qu'une grille de jeu, des numéros de cases de la grille, des indications de date et autres et d'autre part, des inscriptions variables portées par le joueur dans la grille de jeu ainsi que des inscriptions fixes telles que des repères de cadrage, un code relatif au type de jeu auquel appartient le bulletin.

En regard de la zone de focalisation des faisceaux émis par les diodes électroluminescentes sont disposés des conducteurs de lumière de transmission des faisceaux vers des éléments photo-sensibles.

Si on suppose que les diodes électroluminescentes émettent toutes un faisceau lumineux de même intensité, et que les photo-détecteurs délivrent tous des signaux de réponse égaux, on obtient un niveau de sortie identique pour chaque couple diode électroluminescente - élément photosensible.

Or, on a constaté que ni les sources de lumière ou diodes électroluminescentes, ni les éléments photo-sensibles d'un détecteur d'images ne sont parfaits au sens indiqué ci-dessus.

Dans un terminal de jeu, il est nécessaire de lire des croix portées par les joueurs sur des bulletins à l'aide d'un dispositif de lecture dit à " couleur aveugle " fonctionnant sur le principe de la détection de contrastes par tout ou rien.

En supposant que l'on fixe pour les éléments photo-sensibles, un seuil de tension de sortie Vs prédéterminé, si la réponse d'un élément photo-sensible est inférieure à Vs, il est admis qu'il s'agit sur le document lu d'un élément d'image ou pixel noir.

Si au contraire, la réponse de l'élément photo-sensible est supérieure au seuil Vs, le pixel considéré est "blanc".

Il est donc très important que la réponse de tous les éléments photo-sensibles d'un dispositif de lecture d'images utilisé dans un terminal de jeu soit uniforme en dépit des différences de sensibilité des éléments photo-sensibles et des différences entre les intensités lumineuses émises par les sources ou diodes électroluminescentes associées auxdits éléments photo-sensibles.

US-A-38 00 078 décrit un système pour analyser des documents grâce à une série de photodiodes. Le document à analyser est éclairé par deux diodes photoémettrices. Les variations de sensibilité de chaque photodiode ainsi que les variations d'illumination sont compensées par la mémorisation des valeurs des signaux émis par chaque photodiode quand une page blanche est scannée, et l'utilisation de ces valeurs mémorisées pour compenser les signaux émis par chaque photodiode lors de l'analyse ultérieure d'un autre document.

L'invention vise à créer un dispositif d'analyse de supports d'informations du type précité dont la réponse soit la plus homogène possible sur toute son étendue.

Elle a donc pour objet un dispositif d'analyse de supports d'informations comprenant un détecteur d'images comportant dans un boîtier une série de sources lumineuses pour éclairer le support d'informations à analyser à chacune desquelles est associé un élément photo-sensible, les sources lumineuses et éléments photo-sensibles étant disposés en deux rangées suivant la longueur du détecteur d'images, le dispositif comprenant en outre une source de tension de seuil et des moyens de comparaison des signaux de sortie de chacun des éléments photo-sensibles à la tension de seuil de ladite source, le dispositif comportant de plus des moyens de compensation pour faire varier au moins l'un des paramètres comprenant la tension de sortie de chaque élément photo-sensible, la tension de seuil et l'intensité du signal lumineux émis par la source associée pour obtenir une réponse uniforme de tous les éléments photo-sensibles du dispositif de lecture, lesdits moyens de compensation comprennent au moins une mémoire de stockage de valeurs de correction de l'un au moins desdits paramètres relatifs à chaque couple source lumineuse - élément photo-sensible et des moyens de modification dudit au moins un paramètre en fonction des valeurs de correction correspondantes contenues dans ladite mémoire, et lesdits moyens de modification de paramètres comprennent un convertisseur numérique-analogique multiplieur connecté à la sortie de chaque élément photo-sensible et/ou à la sortie de la source de tension de seuil et/ou à la sortie d'un circuit de contrôle de l'intensité lumineuse de chacune des sources lumineuses.

L'invention sera mieux comprise à l'aide de la description qui va suivre, donnée uniquement à titre d'exemple et faite en se référant aux dessins annexés, description qui va suivre, donnée uniquement à titre d'exemple et faite en se référant aux dessins annexés, sur lesquels :

- la Fig.1 est une vue schématique d'un dispositif d'analyse de supports d'informations auquel est appliquée l'invention;
- la Fig.2 est un schéma synoptique du dispositif de la Fig.1 pourvu de moyens d'uniformisation des signaux de sortie des éléments photo-sensibles du dispositif d'analyse de supports d'informatons suivant l'invention;
- la Fig.3 est un schéma électrique du convertisseur numérique-analogique utilisé dans le circuit de la Fig.2;
- la Fig.4 est une courbe de réponse du convertisseur de la Fig.3; et
- la Fig.5 est un graphique montrant la courbe de réponse d'un dispositif de lecture d'image sans les moyens de compensation et avec les moyens de compensation suivant l'invention.

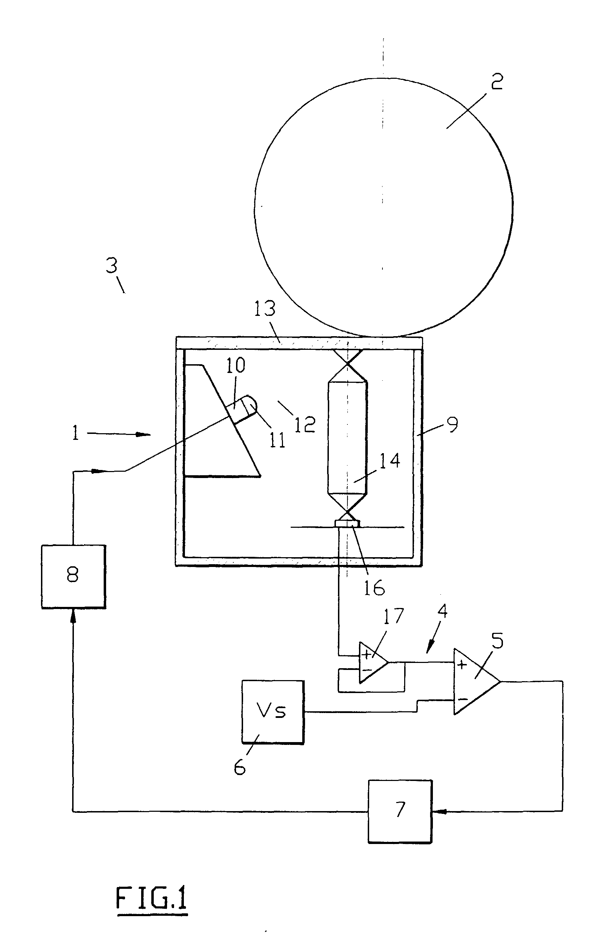

Sur la Fig.1, on a représenté schématiquement un dispositif d'analyse de supports d'informations auquel sont destinés à être appliqués les moyens de compensation suivant l'invention.

Ce dispositif comporte principalement un détecteur d'images 1 disposé en regard d'un rouleau 2 d'entraînement d'un document 3 à analyser.

Le rouleau 2 est relié à un moteur électrique pas à pas non représenté destiné à permettre l'analyse du document 3 par lignes de balayage successives avec une résolution verticale qui est fonction du pas adopté pour le déplacement du rouleau 2.

Le détecteur d'images 1 est connecté à un dispositif 4 de traitement de données qui comporte entre autre un comparateur 5 connecté entre la sortie de données du détecteur d'images et l'entrée d'une unité de traitement 7 des signaux de sortie du comparateur 5 dont la sortie est connectée à une entrée de l'unité de traitement de données 7.

L'unité de traitement de données 7 est connectée d'une part à un circuit de commande non représenté du moteur pas à pas d'entraînement du rouleau 2 et d'autre part, à un circuit de contrôle d'intensité lumineuse 8.

La sortie du circuit de contrôle 8 est connectée au dispositif détecteur d'images 1 de la manière qui sera décrite ci-après.

Le détecteur d'images 1 comporte un boîtier 9 de forme parallèlépipédique dans lequel est montée une rangée de diodes électroluminescentes 10 dont le nombre est fonction de la résolution horizontale et de l'intensité lumineuse requises.

A ces diodes 10 sont associés des organes 11 de focalisation et de filtrage de la lumière destinés à focaliser les faisceaux 12 sur une paroi transparente 13 du boîtier 9 du détecteur contre laquelle doit être appliquée la face du document 3 à analyser qui dans le cas d'un bulletin de jeu porte d'une part des inscriptions fixes telles qu'une grille de jeu, des numéros de case de la grille, des indications de date et autres, imprimées dans la couleur de la lumière émise et qui ne seront donc pas reproduites par le dispositif et d'autre part, des inscriptions variables portées par le joueur dans la grille de jeu dans une couleur différente de celle de la lumière émise, ainsi que des inscriptions fixes telles que des repères de cadrage, un code relatif au type de jeu auquel appartient le bulletin imprimé dans une couleur différente de celle de la lumière émise et qui seront reproduites.

En regard de la zone de focalisation des faisceaux émis par les diodes électroluminescentes 10, sont disposés des conducteurs de lumière 14 de transmission des faisceaux 12 vers des éléments photo-sensibles 16.

Les éléments photo-sensibles 16 sont connectés chacun par l'intermédiaire d'un amplificateur 17 à une entrée d'un comparateur 5 dont l'autre entrée est connectée à la source 6 de tension de seuil de référence Vs.

La sortie du circuit 8 de contrôle d'intensité lumineuse est connectée aux diodes électroluminescentes 10.

Dans un mode de réalisation préféré, le détecteur d'image comporte 36 diodes électroluminescentes auxquelles sont associés 1728 éléments photo-sensibles.

Si tous les éléments photo-sensibles sont supposés éclairer simultanément avec une lumière uniforme, et si l'on place entre le rouleau 2 et la surface transparente 13 du boîtier 9 du dispositif détecteur d'images, un papier blanc uniforme, à condition que les éléments photo-sensibles 16 soient parfaits, on obtient un niveau identique pour tous ces éléments photo-sensibles.

Or, il s'avère que ni les émetteurs, ni les éléments photo-sensibles ne sont parfaits.

Dans les terminaux de prise de jeu, tels que le terminal décrit en particulier dans la demande de brevet français n° 92 11 275 déposée le 22 septembre 1992 par la Demanderesse et publiée le 25 mars 1994, c'est-à-dire après la date de priorité de la présente demande, et également dans EP-A-0 589 755 qui fait partie de l'état de la technique selon l'article 54 (3) et (4) CBE, on procède à la lecture de croix inscrites sur des bulletins avec un dispositif détecteur d'images dit à couleur aveugle fonctionnant sur le principe de la détection des contrastes.

Les signaux de sortie des éléments photo-sensibles du détecteur d'images dont le niveau est inférieur à un seuil Vs, correspondent à un pixel noir alors que les signaux de niveau supérieur au seuil précité, correspondent à des pixels blancs.

Le problème qui se pose est que la sensibilité des ensembles constitués par des couples diode électroluminescente - élément photo-sensible, n'est pas constante.

Il s'agit donc de procéder à une correction des signaux de sortie des éléments photo-sensibles.

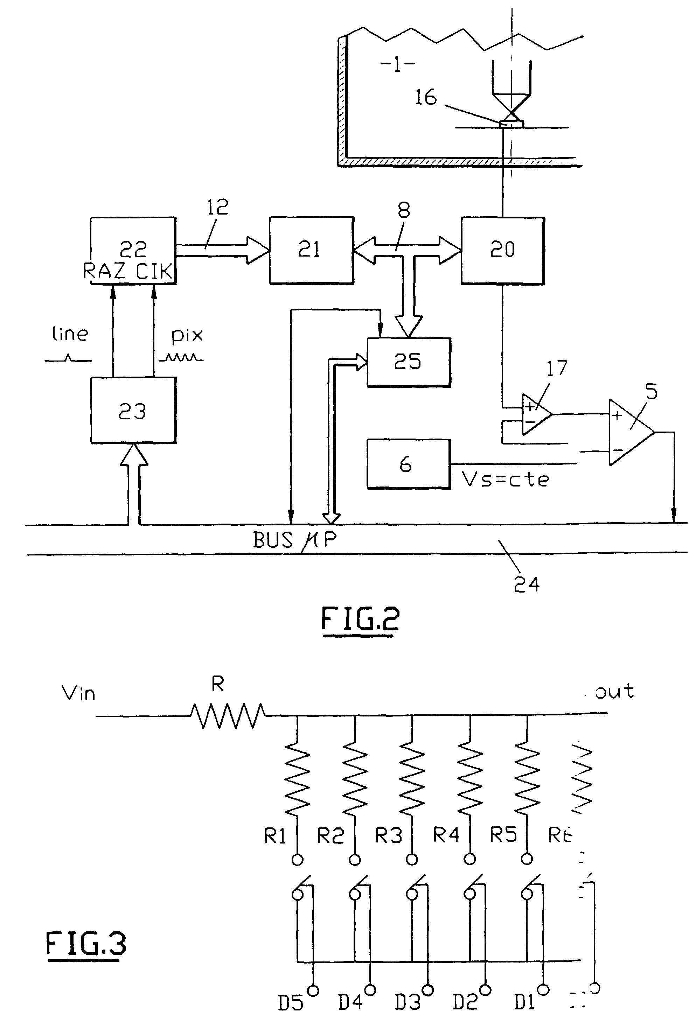

Le circuit représenté à la Fig.2 permet d'assurer une telle correction.

Ce circuit est interposé entre les éléments photo-sensibles 16 et l'amplificateur 17 associé au comparateur 5 du dispositif de traitement de données 4 représenté à la Fig.1.

Il comporte essentiellement un convertisseur numérique-analogique 20 multiplieur connecté entre les éléments photo-sensibles 16 et l'amplificateur 17 précité.

A ce convertisseur numérique-analogique multiplieur qui va être décrit plus en détail en référence à la Fig.3, est associée une mémoire 21 telle qu'une mémoire EPROM ou RAM par exemple dont l'entrée d'adresse est reliée à un compteur 22 tel qu'un compteur à 11 bits par exemple connecté à son tour à un circuit d'horloge 23 qui applique des signaux aux entrées de remise à zéro RAZ et d'horloge CLK du compteur 22.

Le circuit d'horloge 23 est connecté à un bus de microprocesseur 24.

Le circuit comporte également un circuit de commande de bus à trois états 25 relié par un conducteur à huit lignes entre la mémoire 21 et le convertisseur analogique-numérique multiplieur 20.

Le circuit 25 est de plus relié au bus de microprocesseur 24.

La sortie du comparateur 5 est reliée au bus de microprocesseur 24 qui fait partie de l'unité de traitement 7 (Fig.1).

Dans le présent exemple, le circuit de la Fig.2 et plus particulièrement le convertisseur numérique-analogique 20 qu'il comporte est connecté entre les éléments photo-sensibles 16 du dispositif détecteur d'images 1 et le comparateur 5 de la sortie de ces éléments photo-sensibles avec la tension de seuil Vs.

Cependant, ce circuit peut également être connecté entre la source 6 de tension de seuil et l'entrée correspondante du comparateur 5 ou encore à la sortie du circuit 8 de contrôle d'intensité lumineuse des diodes électroluminescentes 10.

Le fonctionnement du circuit de la Fig.2 est le suivant.

Une logique non représentée programme l'horloge 23 pour qu'elle génère des signaux LINE CLK et PIXEL CLK. Ces signaux étant appliqués au compteur 22 ou plus particulièrement à ses entrées RAZ et CLK, le compteur procède à une incrémentation pour chaque pixel du détecteur d'images à 1728.

Les sorties du compteur qui dans le présent exemple sont au nombre de 12, composent les adresses de la mémoire 21 qui est une RAM de 2K x 8, par exemple ou une EPROM.

En mode lecture, pour chaque pixel CLK du compteur 22, l'adresse de la mémoire 21 change et la mémoire envoie sur sa sortie de données, une valeur au convertisseur numérique-analogique 20. Le convertisseur numérique-analogique multiplieur exécute une multiplication entre cette valeur mémorisée et le signal de sortie de l'élément photo-sensible 16 correspondant. L'opération précitée se répète jusqu'à ce que les 1728 éléments photo-sensibles 16 aient été pris en compte.

Dans le mode écriture, on utilise à la place du support à analyser un support étalon à coefficient de réflexion constant.

Un algorithme permet de charger pour chaque pixel du dispositif détecteur d'images dans la mémoire 21, une valeur de compensation permettant au comparateur 5 de changer d'état lorsque le signal de sortie de l'élément photo-sensible 16 associé aux diodes 10 atteint la valeur de seuil Vs délivrée par la source de tension de seuil 6 après que ce signal de sortie ait été compensé pour tenir compte de l'imprécision de réponse de l'élément photo-sensible associé à la diode électroluminescente.

Le convertisseur numérique-analogique 20 peut être soit un convertisseur linéaire, soit un convertisseur non-linéaire.

Dans un système linéaire à huit bits, la valeur numérique du convertisseur numérique-analogique est comprise entre 0/255 et 255/255, par pas de 1/255.

On obtient ainsi une table que l'on charge dans la mémoire 21, les valeurs de cette table correspondant aux valeurs de la correction de chaque pixel, c'est à dire de chaque couple diode électroluminescente - élément photo-sensible pour obtenir une réponse homogène de tous les pixels du détecteur d'images.

On préfère cependant utiliser un convertisseur analogique-numérique non linéaire dont la construction va maintenant être décrite en référence à la Fig.3.

Ce convertisseur comporte une résistance d'entrée R connectée entre son entrée et sa sortie.

La résistance d'entrée R du convertisseur est reliée à des résistances R1, R2, R3, R4, R5 et R6 connectées en parallèle avec interposition en série avec chaque résistance d'un interrupteur commandé DO, D1, D2, D3, D4, D5.

Les résistances R1 à R6 ont des valeurs liées à celles de la résistance R par les relations suivantes :

$$R1 = R/2$$
$$R2 = R$$
$$R3 = 2R$$
$$R4 = 4R$$
$$R5 = 8R$$
$$R6 = 16R$$

Bien entendu, le nombre de ces résistances peut être différent selon la résolution et l'atténuation souhaitées.

Les électrodes de commande des interrupteurs DO à D5 du convertisseur numérique-analogique 20 sont connectées aux bits de sortie de données correspondants B0 à B5 de la mémoire 21.

La relation qui lie la tension de sortie Vout à la tension d'entrée Vin du convertisseur numérique-analogique non linéaire de la Fig.3 est la suivante :

$$Vout = Vin \times \frac{\dfrac{R}{(B5x2+B4+B3/2+B2/4+B1/8+B0/16)}}{\dfrac{R}{(B5x2+B4+B3/2+B2/4+B1/8+B0/16)} + R}$$

avec

$B$ = 0 ou 1

$Bi$ = numéro du bit de sortie.

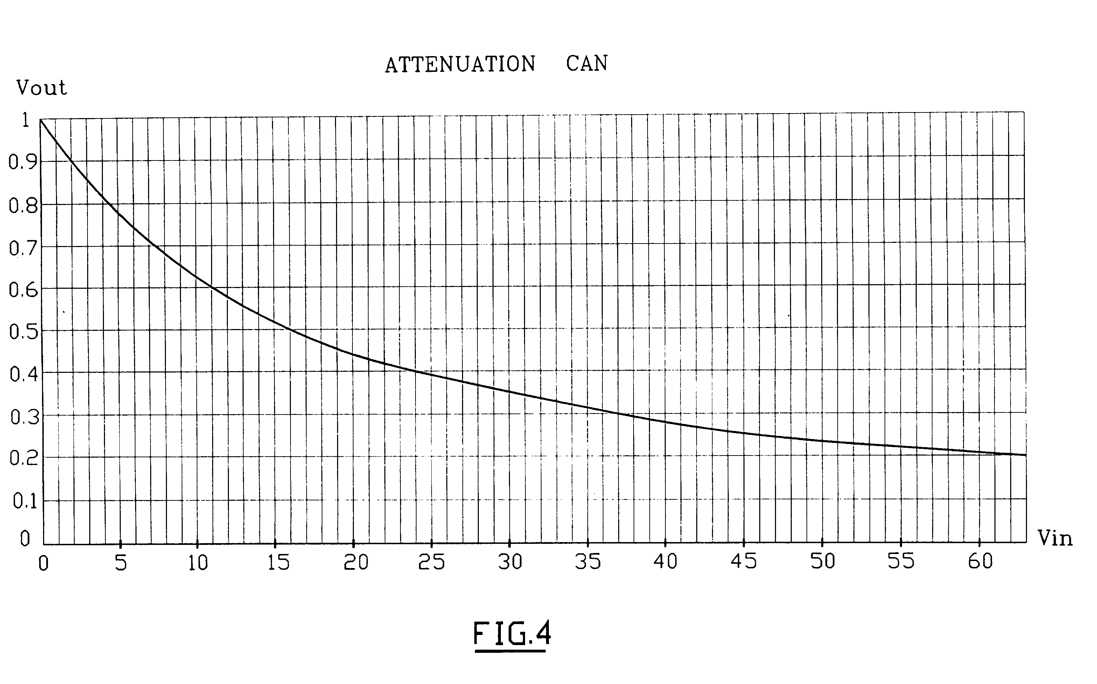

La courbe de réponse du convertisseur analogique-numérique multiplieur de la Fig.3 est représentée à la Fig.4 où l'on voit qu'avec six résistances en parallèle R1 à R6, correspondant à 6 bits de sortie de la mémoire 21, on dispose de 64 marches de tension.

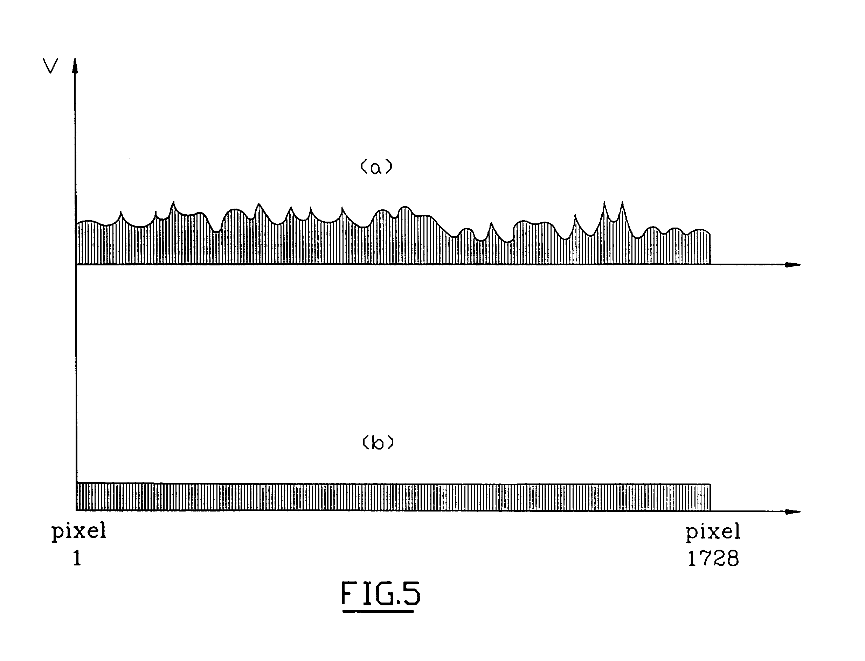

Sur la Fig.5, on a représenté en (a), la courbe de réponse d'un dispositif détecteur d'images dépourvu des moyens de compensation suivant l'invention et en (b), la courbe de réponse de ce détecteur pourvu desdits moyens de compensation.

On constate en comparant ces deux courbes que les moyens de compensation suivant l'invention permettent de gagner en uniformité de la réponse sur toute la longueur du dispositif détecteur d'images.

En effet, on voit sur la courbe (b) que les signaux de réponse de l'ensemble des éléments photo-sensibles du dispositif détecteur d'images sont à peu près constants à quelques exceptions près.

## Revendications

1. Dispositif d'analyse de supports d'informations comprenant un détecteur d'images (1) comportant dans un boîtier (9) une série de sources lumineuses (10) pour éclairer le support d'informations à analyser à chacune desquelles est associé un élément photo-sensible (16), les sources lumineuses (10) et éléments photo-sensibles (16) étant disposés en deux rangées suivant la longueur du détecteur d'images, le dispositif comprenant en outre une source de tension de seuil (6) et des moyens (5) de comparaison des signaux de sortie de chacun des éléments photo-sensibles (16) à la tension de seuil (Vs) de ladite source, le dispositif comportant de plus des moyens de compensation (20,21,22,23,24,25) pour faire varier au moins l'un des paramètres comprenant la tension de sortie de chaque élément photo-sensible (16), la tension de seuil (Vs) et l'intensité du signal lumineux émis par la source (10) associée pour obtenir une réponse uniforme de tous les éléments photo-sensibles du dispositif de lecture, lesdits moyens de compensation comprennent au moins une mémoire (21) de stockage de valeurs de correction de l'un au moins desdits paramètres relatifs à chaque couple source lumineuse (10) - élément photo-sensible (11) et des moyens (20) de modification dudit au moins un paramètre en fonction des valeurs de correction correspondantes contenues dans ladite mémoire (21), et lesdits moyens de modification de paramètres comprennent un convertisseur numérique-analogique multiplieur (20) connecté à la sortie de chaque élément photo-sensible (16) et/ou à la sortie de la source (6) de tension de seuil (Vs) et/ou à la sortie d'un circuit (8) de contrôle de l'intensité lumineuse de chacune des sources lumineuses (10).

2. Dispositif d'analyse de supports d'informations suivant la revendication 1, caractérisé en ce que le convertisseur numérique-analogique (20) est du type le convertisseur numérique-analogique (20) est du type linéaire ou non-linéaire.

3. Dispositif d'analyse de supports d'informations suivant la revendication 2, caratérisé en ce que le convertisseur numérique-analogique multiplieur non linéaire comprend une résistance d'entrée (R) connectée entre l'entrée et la sortie du convertisseur et des résistances (R1,R2,R3, R4, R5, R6) connectées en parallèle à la sortie du convertisseur avec interposition d'un interrupteur commandé (D0, D1, D2, D3; D4, D5) en série avec chacune des résistances en parallèle, la borne de commande de chaque interrupteur étant reliée à une sortie de données correspondante de la mémoire (21).

**4.** Dispositif d'analyse de supports d'informations suivant la revendication 3, caractérisé en ce que les valeurs de résistances en parallèle du convertisseur numérique-analogique (20) sont liées à la valeur de la résistance d'entrée (R1) par les relations :

R1 = R/2
R2 = R
R3 = 2R
R4 = 4R
R5 = 8R
R6 = 16R

et en ce que le signal de sortie Vout du convertisseur est lié à son signal d'entrée Vin par la relation :

$$\text{Vout} = \text{Vin} \times \dfrac{\dfrac{R}{(B5x2+B4+B3/2+B2/4+B1/8+B0/16)}}{\dfrac{R}{(B5x2+B4+B3/2+B2/4+B1/8+B0/16)} + R}$$

avec

B = 0 ou 1
Bi = numéro du bit de sortie

**5.** Dispositif d'analyse de supports d'informations suivant l'une des revendications 1 à 4, caractérisé en ce qu'il comporte en outre un compteur (22) commandé par une horloge (23) pour assurer l'adressage de la mémoire (21) en vue de l'application par celle-ci des données de correction correspondant aux couples successifs source lumineuse (10) - élément photo-sensible (16) du détecteur d'images (1).

**Patentansprüche**

**1.** Vorrichtung zur Analyse von Informationsträgern mit einem Bilddetektor (1), welcher in einem Gehäuse (9) eine Reihe von Lichtquellen (10) zur Beleuchtung des zu analysierenden Informationsträgers aufweist, mit welchen jeweils ein lichtempfindliches Element (16) verbunden ist, wobei die Lichtquellen (10) und lichtempfindlichen Elemente (16) in zwei Reihen entlang der Länge des Bilddetektors angeordnet sind, wobei die Vorrichtung außerdem eine Schwellenspannungsquelle (6) und Vorrichtungen (5) zum Vergleich der Ausgangssignale jedes der lichtempfindlichen Elemente (16) mit der Schwellenspannung (Vs) der Quelle aufweist, wobei die Vorrichtung außerdem Vorrichtungen zur Kompensation (20,21,22,23,24,25) aufweist, um wenigstens einen der Parameter zu variieren, welche die Ausgangsspannung jedes lichtempfindlichen Elementes (16), die Schwellenspannung (Vs) und die Intensität des von der zugeordneten Quelle (10) ausgesandten Lichtsignals umfassen, um einen gleichmäßigen Frequenzgang aller lichtempfindlichen Elemente der Lesevorrichtung zu erreichen, wobei die Kompensationsvorrichtungen wenigstens einen Speicher (21) zum Speichern von Korrekturwerten von wenigstens einem der Parameter bezüglich jedes Paares aus Lichtquelle (10) und lichtempfindlichem Element (11) und Vorrichtungen (20) zur Veränderung von wenigstens einem Parameter abhängig von den in dem Speicher (21) enthaltenen entsprechenden Korrekturwerten aufweisen, und wobei die Vorrichtungen zur Veränderung der Parameter einen Multiplikator-Digital-Analog-Umsetzer (20) aufweisen, welcher an den Ausgang jedes lichtempfindlichen Elementes (16) und/oder an den Ausgang der Schwellenspannungsquelle (6) und/oder an den Ausgang eines Steuerstromkreises (8) für die Lichtintensität jeder der Lichtquellen (10) angeschlossen ist.

**2.** Vorrichtung zur Analyse von Informationsträgern gemäß Anspruch 1, dadurch gekennzeichnet, daß der Digital-Analog-Umsetzer (20) von der linearen oder nicht-linearen Art ist.

**3.** Vorrichtung zur Analyse von Informationsträgern gemäß Anspruch 2, dadurch gekennzeichnet, daß der nicht-lineare Multiplikator-Digital-Analog-Umsetzer einen Eingangswiderstand ( ), welcher zwischen dem Eingang und dem Ausgang des Umsetzers angeschlossen ist und Widerstände (R1,R2,R3, R4, R5, R6) aufweist, welche parallel an den Ausgang des Umsetzers angeschlossen sind mit Zwischensetzung eines gesteuerten Schalters (D0,D1,D2,D3,D4,D5) in Reihe mit jedem der parallel angeschlossenen Widerstände, wobei die Steuerklemme jedes Schalters mit einem entsprechenden Datenausgang des Speichers (21) verbunden ist.

**4.** Vorrichtung zur Analyse von Informationsträgern gemäß Anspruch 3, dadurch gekennzeichnet, daß die Werte der parallel angeschlossenen Widerstände des Digital-Analog-Umsetzers (20) an den Wert des Eingangswiderstandes (R1) durch die Verhältnisse gebunden sind:

$R1 = R/2$
$R2 = R$
$R3 = 2R$
$R4 = 4R$
$R5 = 8R$
$R6 = 16R$

und daß das Ausgangssignal Vout des Umsetzers an sein Eingangssignal Vin durch das Verhältnis gebunden ist:

$$Vout = Vin \times \cfrac{\cfrac{R}{(B5x2+B4+B3/2+B2/4+B1/8+B0/16)}}{\cfrac{R}{(B5x2+B4+B3/2+B2/4+B1/8+B0/16)} + R}$$

mit

$B = 0$ oder $1$
$Bi = $ Zahl des Ausgangsbits.

**5.** Vorrichtung zur Analyse von Informationsträgern gemäß einem der Ansprüche 1 bis 4, dadurch gekennzeichnet, daß sie außerdem ein von einem Taktgeber (23) gesteuertes Zählwerk (22) aufweist, um die Adressierung des Speichers (21) im Hinblick auf dessen Anwendung der Korrekturdaten entsprechend den aufeinanderfolgenden Paaren aus Lichtquelle (10) und lichtempfindlichem Element (16) des Bilddetektors (1) zu gewährleisten.

## Claims

**1.** Device for analysing data carriers comprising an image sensor (1) having in a housing (9) a series of light sources (10) for illuminating the data carrier to be analysed, a light-sensitive element (16) being associated with each of the light sources; wherein the light sources (10) and the light-sensitive elements (16) are disposed in two rows along the length of the image sensor, the device also comprising a threshold voltage source (6) and means (5) for comparing the output signals of each of the light-sensitive elements (16) with the threshold voltage (Vs) of the said source, the device also having compensating means (20. 21, 22, 23, 24, 25) in order to vary at least one of the parameters comprising the output voltage of each light-sensitive element (16), the threshold voltage (Vs) and the intensity of the light signal emitted by the source associated (10) in order to obtain a uniform response of all the light-sensitive elements of the read-out device, the said compensating means comprising at least one memory (21) for storing values for correcting at least one of the said parameters relative to each pair consisting of light source (10) and light-sensitive element (11) and means (20) for modifying the said at least one parameter as a function of the corresponding correction values contained in the said memory (21), and the said means for modifying parameters comprise a multiplier digital/analogue converter (20) connected to the output of each light-sensitive element (16) and/or to the output of the source (6) of threshold voltage (Vs) and/or to the output of a circuit (8) for controlling the luminous intensity of each of the light sources (10).

**2.** Device for analysing data carriers as claimed in Claim 1, characterised in that the digital/analogue converter (20) is of the linear or non-linear type.

**3.** Device for analysing data carriers as claimed in Claim 2, characterised in that the non-linear multiplier digital/analogue converter comprises an input resistance (R) connected between the input and the output of the converter and resistances (R1, R2, R3, R4, R5, R6) connected in parallel to the output of the converter with the interposition of a controlled switch (D0, D1, D2, D3. D4. D5) in series with each of the resistances in parallel, the control terminal of each switch being connected to a corresponding data output of the memory (21).

**4.** Device for analysing data carriers as claimed in Claim 3, characterised in that the values of resistances in parallel of the digital/analogue converter (20) are linked to the value of the input resistance (R1) by the relationships:

R1 = R/2
R2 = R
R3 = 2R
R4 = 4R
R5 = 8R
R6 = 16R

and that the output signal Vout of the converter is linked to its input signal Vin by the relationship

$$Vout = Vin \times \dfrac{\dfrac{R}{(B5x2+B4+B3/2+B2/4+B1/8+B0/16)}}{\dfrac{R}{(B5x2+B4+B3/2+B2/4+B1/8+B0/16)} + R}$$

where

B = 0 or 1
Bi = number of the output bit.

5. Device for analysing data carriers as claimed in one of Claims 1 to 4. characterised in that it also includes a counter (22) controlled by a clock (23) in order to ensure the addressing of the memory (21) with a view to the application by the latter of the correction data corresponding the successive pairs consisting of light source (10) and light-sensitive element (16) of the image sensor (1).

## FIG.1

## FIG.2

## FIG.3

ATTENUATION   CAN

FIG.4

EP 0 636 995 B1

(a)

(b)

pixel
1728

pixel
1

FIG.5